# EUROPEAN PATENT APPLICATION

(11) **EP 4 718 770 A1**
(43) Date of publication of application: **01.04.2026**
(21) Application number: 25202593.7
(22) Date of filing: 16.09.2025
(51) Int. Cl.: H04L 9/08, H04L 9/32, H04L 9/14

(54) **METHOD AND DEVICE FOR POST-QUANTUM SECURE SHARED SECRET GENERATION WITH FORWARD SECRECY**

(30) Priority: 25.09.2024 US 202418895438
(71) Applicant: INTEL Corporation, Santa Clara, CA 95054 (US)
(72) Inventor: GHOSH, Santosh, Hillsboro, 97124 (US); RUAN, Xiaoyu, Folsom, 95630 (US); LEIDERMAN, Daniel, 4447403 Kfar Saba (IL); VARELA VELASCO, Ruben Daniel, Portland, 97229 (US)
(74) Representative: 2SPL Patentanwälte PartG mbB

(57) **Abstract**

A method and device for generating a shared session secret with forward secrecy between a first device and a second device. The first and second devices perform mutual authentication. The first and second devices establish a first shared secret using a key encapsulation mechanism with a long-term cryptographic key pair of the devices. The first and second devices generate an ephemeral cryptographic key pair comprising an ephemeral public key and an ephemeral private key, respectively, and transfer the ephemeral public key of the device to the other device using the first shared secret. The first and second devices then establish a second shared secret using the key encapsulation mechanism with the ephemeral public keys of the first device and the second device. The second shared secret is used as a temporary shared session secret.

## Description

### Background

In order to meet the diverse customers' needs, semiconductor companies intend to develop and deliver heterogeneous compute systems by mixing various device types from their multiple generations. It is infeasible to maintain an inbuilt trust among these devices that are putting together in a specific compute system. On the other hand, to build a secure and trusted compute system, it is required to have secure communications among the underlying devices.

National Security Agency (NSA) recommended post-quantum (PQ) security for all compute systems beyond 2025. Leighton-Micali Signature (LMS) and Extended Merkle Signature Scheme (XMSS) are the approved digital signature algorithms in CNSA2.0. LMS is a stateful scheme for which signing and tracking of the one-time signing keys in the device is infeasible. National Institute of Standards and Technology (NIST) recommended that Post-Quantum Key Encapsulation Mechanism (PQ-KEM) assumes a trusted sender who picks a random secret and sends it to the receiver who decrypts the secret using a private key and uses as a shared secret, which can be forged by any man in the middle (MIM) attacker. Additionally, forward secrecy is an essential property to establish shared session secrets which is not provided by PQ-KEM.

Conventional use of PQ-KEM does not provide any forward secrecy. Conventional techniques provide forward secrecy by performing a signing operation in the device which is infeasible using PQ LMS signature scheme.

### Brief description of the Figures

Some examples of apparatuses and/or methods will be described in the following by way of example only, and with reference to the accompanying figures, in which
FIG. 1 is an example compute system;
FIG. 2 is a block diagram of an example device;
FIG. 3 is a flow diagram of an example process for generating a shared session secret with forward secrecy between a first device and a second device;
FIG. 4 shows an example flow for generating a secure shared session secret with forward secrecy;
FIG. 5 is a block diagram of an electronic apparatus incorporating at least one electronic assembly and/or method described herein;
FIG. 6 illustrates a computing device in accordance with one implementation of the invention; and
FIG. 7 is included to show an example of a higher-level device application for the disclosed embodiments.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

In the following description, specific details are set forth, but examples of the technologies described herein may be practiced without these specific details. Well-known circuits, structures, and techniques have not been shown in detail to avoid obscuring an understanding of this description. "An example," "various examples," "some examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform or resource, even though the instructions contained in the software or firmware are not actively being executed by the system, device, platform, or resource.

The description may use the phrases "in an example," "in examples," "in some examples," and/or "in various examples," each of which may refer to one or more of the same or different examples. Furthermore, the terms "comprising," "including," "having," and the like, as used with respect to examples of the present disclosure, are synonymous.

Hereafter, example schemes are disclosed for a low-overhead quantum attack resistant shared secret generation with forward secrecy. In the example schemes disclosed herein, a PQ secure shared secret is established with forward secrecy by utilizing multi-layer key encapsulation mechanism (KEM) operations which does not require any signing operations in the device.

Forward secrecy is a feature of certain cryptographic protocols that ensures the confidentiality of past communication sessions even if the private key of any involved party is compromised in the future. In cryptographic protocols with forward secrecy, a unique session key is generated for each communication session. These session keys are used to encrypt the data for that specific session only. Forward secrecy relies on the use of ephemeral keys, which are temporary keys generated for each session. These keys are not stored permanently and are discarded after the session ends. If, at any point of time in the future, the long-term private key of any involved party is compromised, it does not affect the confidentiality of the past sessions. The ephemeral keys and session keys of past sessions are not derivable from the long-term keys, ensuring that the encrypted data from those sessions remains secure.

A conventional key exchange mechanism that supports forward secrecy is the Diffie-Hellman (DH) or Elliptic Curve Diffie-Hellman (ECDH) key exchange. These mechanisms allow two parties to securely generate a shared session key over an insecure channel. These conventional mechanisms provide forward secrecy to shared session secret generation by signing the ephemeral Diffie-Hellman public key share. However, due to the complexities of tracking one-time private keys in the current NSA recommended post-quantum digital signature schemes (e.g., LMS and XMSS), it is infeasible to perform signing operation in the device at the system power-on phase. This makes the replacement of the existing classical cryptographic protocols to post-quantum cryptographic protocols very challenging for device-to-device communication at the system boot time.

In the example schemes disclosed herein, each device performs the following steps to establish an authenticated shared session secret with forward secrecy.

### First step: Performing mutual authentication

Mutual authentication between two devices may be performed by each device by transferring each device's long-term public key and a public key certificate or a public key certificate chain that uniquely verifies its long-term public key to the other device. The long-term public key and public key certificate chain are stored in each device. Each device verifies the public key certificate or the chain of public key certificates of the other device, for example using a global public key of the manufacture of the other device.

### Second step: Establishing ephemeral cryptographic keys for forward secrecy

Each device generates a secret randomly, generates a ciphertext by encapsulating the secret using KEM (e.g., PQ-KEM) with the other device's long-term public key, and sends the ciphertext to the other device. A KEM is a cryptographic technique used to securely transmit a key (a random secret in the examples disclosed herein) over an insecure channel. The key (a random secret) is encapsulated using the receiver's public key and sent and recovered by using the receiver's private key. A PQ-KEM is a cryptographic method designed to ensure secure key exchange in a world where quantum computers exist and can break many classical cryptographic algorithms. Any PQ-KEM techniques may be used for encapsulating the secret. For example, NIST's Multi-Layer Key Encapsulation Mechanism (ML-KEM), Bit Flipping Key Encapsulation (BIKE), Classic-McEliece, or the like may be used. Each device receives a ciphertext from the other device and decapsulates the received ciphertext to retrieve the other device's secret, and then combines (e.g., using a key derivation function (KDF)) the retrieved secret with its own secret to generate a single-use (i.e., temporary) shared secret (K1).

### Third step: Establishing a shared session secret with forward secrecy

Each device generates an ephemeral public-private key pair that is used to provide forward secrecy. Each device may encrypt the ephemeral public key generated by each device using the single-use shared secret (K1) using an authenticated encryption mechanism (e.g., Ascon, Advanced Encryption Standard with Galois Counter Mode (AES-GCM), Poly_Chacha, etc.) and transfers the ciphertext to the other device. Each device decrypts the ciphertext received from the other device to obtain the other device's ephemeral public key (PKe). Each device then generates another secret randomly, generates a ciphertext by encapsulating the secret using the other device's ephemeral public key (PKe), and sends the ciphertext to the other device. Each device decapsulates the received ciphertext and obtains the other device's secret, and then combines (e.g., using a KDF) the other device's secret with its own secret to generate the shared session secret (K2), which provides forward secrecy.

Given the momentum in industry on adopting a PQ cryptographic protocol to protect against quantum attacks, resilient PQ cryptography-based security solutions are needed for die-to-die, package-to-package, system-to-accelerator, and beyond. The example schemes disclosed herein can be a key for establishing a shared secret with forward secrecy between two devices/systems using PQ cryptographic algorithms.

The example schemes disclosed herein provide a method for post-quantum shared secret generation between two parties with forward secrecy and mutual authentication. This an essential security technology for establishing shared secrets among multiple heterogeneous devices within a platform.

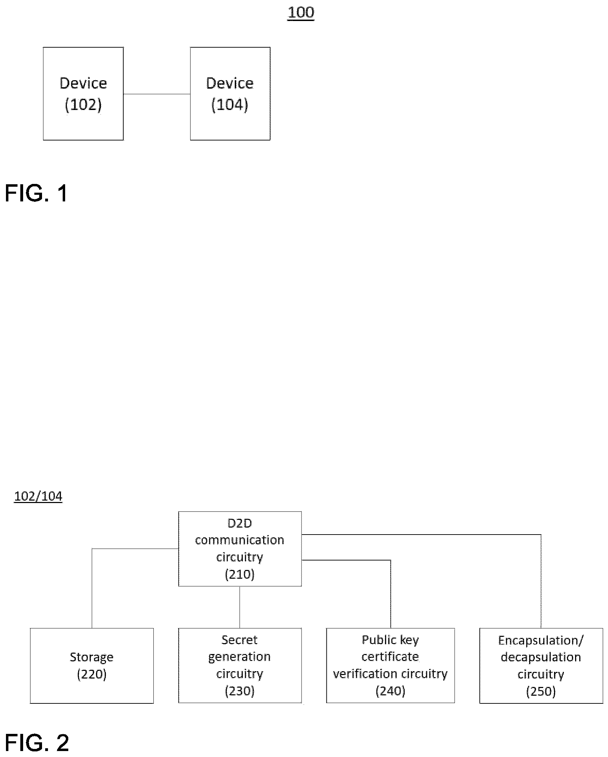

FIG. 1 is an example compute system 100 (compute platform). The compute system 100 includes a plurality of devices 102, 104 (e.g., semiconductor dies, chiplets, packages, systems, or the like). FIG. 1 shows only two devices as an example, but the compute system 100 may include any number of devices. The compute system 100 may include numerous same or different devices including, but not limited to, a central processing unit (CPU), a graphics processing unit (GPU), hardware accelerators, and/or other devices, such as a platform controller hub (PCH), a baseboard management controller (BMC), input/output devices, etc.

The devices 102, 104 integrated into the compute system 100 may be devices of different generations from the same manufacturer or devices from different manufacturers. Some compute systems (e.g., a compute system for customized generative artificial intelligence (AI), or the like) highly demand a heterogeneous compute platform. To design the most optimum compute platform to meet the customer's specific needs, different devices may be selected and integrated across their multiple generations or from multiple manufacturers. Therefore, it is infeasible that these devices on the compute system 100 will carry preexisting trusts. In examples, the devices 102 and 104 may perform shared secret generation between the devices 102 and 104 without any preexisting trusts. This is an essential security feature for establishing shared secrets among multiple heterogeneous devices within the compute system/platform.

FIG. 2 is a block diagram of an example device 102/104. The device 102/104 is configured to establish a shared session secret with forward secrecy with another device without any preexisting trusts. The device 102/104 includes a device-to-device (D2D) communication circuitry 210, a storage circuitry 220, a secret generation circuitry 230, a public key certificate verification circuitry 240, and an encapsulation/decapsulation circuitry 250.

The storage circuitry 220 is configured to store a pair of cryptographic keys (a long-term public key and a long-term private key) of the device 102/104 and a public key certificate or a chain of public key certificates of the device 102/104. The storage circuitry 220 may also store a global public key of the manufacturer of the device 102/104. Each device 102/104 may contain its own long-term key pair in the storage circuitry 220 along with the public key certificate or a chain of public key certificates provided by the manufacturer of the device 102/104. Any other party can verify this public key certificate or the public key certificate chain using the public key of the manufacturer of the device 102/104. In examples, the storage circuitry 220 may be an electronic fuse (eFuse). An electronic fuse is a microscopic fuse that is put into a chip, that can be used as a one-time programmable read-only memory (ROM) or write-restricted memory.

The D2D communication circuitry 210 is configured to transfer data to another device (a second device) directly. For example, the D2D communication circuitry 210 may transfer data based on the Peripheral Component Interconnect Express (PCIe) protocol. The D2D communication circuitry 210 of the device 102/104 retrieves the long-term public key and the public key certificate of the device 102/104 from the storage 220 and sends the long-term public key and the public key certificate of the device 102/104 to another device that the device wants to establish a shared secret. For example, in the compute platform 100 shown in FIG. 1, the D2D communication circuitry 210 of the device 102 sends the long-term public key and the public key certificate or public key certificate chain of the device 102 to the device 104, and the D2D communication circuitry 210 of the device 104 sends the long-term public key and the public key certificate or public key certificate chain of the device 104 to the device 102.

A public key certificate (a digital certificate) is an electronic document used to prove the validity of a public key. The public key certificate includes information about the public key, information about the identity of its owner, and the digital signature of an entity (issuer) that has verified the certificate's contents, etc. If the device examining the public key certificate trusts the issuer and finds the digital signature to be a valid signature of that issuer, then the device can use the public key to communicate securely with the certificate's subject.

A chain of digital certificates is a sequence of certificates that enables the verification of a certificate's authenticity. It links a given certificate back to a trusted root certificate authority (CA) through one or more intermediate certificates. For example, the chain of certificates may be a depth 2 certificate chain. A depth 2 certificate chain refers to a sequence of three certificates used to establish trust in a digital communication. In a depth 2 certificate chain, a root certificate is the top-most certificate in the hierarchy. It is self-signed and issued by a trusted certificate authority. The root certificate is widely trusted and is used to sign intermediate certificates. An intermediate certificate is signed by the root certificate and acts as a bridge between the root certificate and the end-entity certificate. The intermediate certificate helps in managing the issuance of certificates and can be revoked without affecting the root certificate. The end-entity certificate is the certificate issued to the end user (e.g., server, device, etc.). The end-entity certificate is signed by the intermediate certificate and is used in the actual digital communication. This chain of certificates ensures that the end-entity certificate can be trusted because it has been signed by an intermediate certificate, which in turn is signed by a trusted root certificate. Hereafter, the term "a public key certificate" will be used inclusive of a chain of public key certificates.

After receiving the long-term public key and the public key certificate of another device, the public key certificate verification circuitry 240 of each device verifies the received public key certificate of another device. For example, the device 102 receives the long-term public key and the public key certificate of the device 104 and the public key certificate verification circuitry 240 of the device 102 verifies the public key certificate of the device 104. The device 104 receives the long-term public key and the public key certificate of the device 102 and the public key certificate verification circuitry 240 of the device 104 verifies the public key certificate of the device 102.

The devices 102 and 104 on the same compute platform 100 may be from the same manufacturer or from different manufactures. The verification of the public key certificate of another device may be implemented depending on these scenarios. Example schemes for the two scenarios are provided below. It should be noted that the schemes disclosed below are merely examples and different schemes may be used for the verification.

In case where the two devices 102 and 104 on the same compute platform 100 are from the same manufacturer (e.g., a CPU and an accelerator (e.g., GPU) on the compute platform are from the same manufacturer), a global public key of the manufacturer of the device may be stored in each device 102 and 104 (e.g., in the respective eFuse inside the device 102 and 104) and used to verify the certificate of the other device. The verification of the public key certificate involves verification of the digital signature included in the public key certificate. The manufacturer generates a digital signature using its global private key on the public key of the respective device. The respective devise's storage circuitry (e.g., eFuse) contains its long-term public key and the public key certificate of the respective device. The receiver (which belongs to the same manufacturer) performs digital signature verification on the received digital signature (i.e., the public key certificate) of the other device using the manufacturer's global public key stored in its storage (e.g., eFuse).

In case where the two devices 102 and 104 on the same compute platform 100 are from different manufacturers (e.g., a CPU and an accelerator (e.g., GPU) on the compute platform are from different manufacturers), the device 102/104 might not have the global public key of the manufacturer of the other device (e.g., in the respective eFuse inside the device). In this case, each device 102/104 may obtain the global public key of the manufacturer of the other device from the manufacturer of the other device to verify the received public key certificate. In some examples, the D2D communication circuitry 210 may have network connectivity to access the public webpage or database of the manufacturer of the other device and obtain the public key of the manufacturer of the other device.

The verification of the public key certificate of the manufacturer may be performed by utilizing any (post-quantum) digital signature algorithm including FIPS 204 (Module-Lattice-Based Digital Signature Standard (ML-DSA)), FIPS 205 (Stateless Hash-Based Digital Signature Standard (SLH-DSA)) and NIST SP 800-208, Recommendation for Stateful Hash-Based Signature Schemes.

After successful verification of the public key certificate of another device, the device 102/104 generates a secret. The secret generation circuitry 230 is configured to generate a secret. For example, the secret generation circuitry 230 may be a random number generator configured to generate a random number as the secret. The device 102/104 then generates a ciphertext of the device 102/104, respectively, using the respective secret.

In some examples, the generated secret is sent to the encapsulation/decapsulation circuitry 250. The encapsulation/decapsulation circuitry 250 is configured to generate a ciphertext by encapsulating the secret generated by the secret generation circuitry 230 using the long-term public key of another device. For example, the encapsulation/decapsulation circuitry 250 of the device 102 generates a ciphertext by encapsulating the secret generated by the secret generation circuitry 230 of the device 102 using the long-term public key of the device 104, and the encapsulation/decapsulation circuitry 250 of the device 104 generates a ciphertext by encapsulating the secret generated by the secret generation circuitry 230 of the device 104 using the long-term public key of the device 102. The D2D communication circuitry 210 of the device 102 is configured to send the ciphertext generated by the device 102 to the device 104, and the D2D communication circuitry 210 of the device 104 is configured to send the ciphertext generated by the device 104 to the device 102.

The encapsulation/decapsulation circuitry 250 is configured to decapsulate the received ciphertext using the long-term private key of the device 102/104 and retrieve the secret generated by the other device. The encapsulation/decapsulation circuitry 250 of the device 102 decapsulates the ciphertext received from the device 104 using the long-term private key of the device 102 and retrieves the secret generated by the device 104. The encapsulation/decapsulation circuitry 250 of the device 104 decapsulates the ciphertext received from the device 102 using the long-term private key of the device 104 and retrieves the secret generated by the device 102.

The D2D communication circuitry 210 is configured to generate a single-use shared secret (a temporary shared secret) by combining its own secret with the secret received from the other device. In some examples, the single-use shared secret may be generated by exclusive OR operation on the two secrets. Alternatively, the single-use shared secret may be generated by using a key derivation function (KDF) with the two secrets.

The encapsulation/decapsulation circuity 250 is configured to generate an ephemeral cryptographic key pair (an ephemeral private key and a corresponding ephemeral public key). The D2D communication circuitry 210 may include encryption/decryption circuitry configured to encrypt the ephemeral public key using the single-use share secret. Alternatively, the encryption/decryption circuitry may be separate from the D2D communication circuitry 210. Hereafter, the examples will be explained for the case that the D2D communication circuitry 210 includes the encryption/decryption circuitry. Any encryption mechanism (e.g., Ascon, AES-GCM, Poly_Chacha, etc.) may be used to encrypt the ephemeral public key with the single-use shared secret. The D2D communication circuitry 210 then transfers the ciphertext (the encrypted ephemeral public key) to the other device. The D2D communication circuitry 210 of the device 102 encrypts the ephemeral public key of the device 102 using the single-use share secret and sends the ciphertext to device 104, and the D2D communication circuitry 210 of the device 104 encrypts the ephemeral public key of the device 104 using the single-use share secret and sends the ciphertext to device 102.

The D2D communication circuitry 210 of each device 102/104 receives the ciphertext and decrypts the ciphertext received from the other device to obtain the other device's ephemeral public key. The D2D communication circuitry 210 of the device 102 decrypts the ciphertext received from the device 104 to obtain the ephemeral public key of the device 104 using the single-use share secret, and the D2D communication circuitry 210 of the device 104 decrypts the ciphertext received from the device 102 to obtain the ephemeral public key of the device 102 using the single-use share secret.

Each device then generates another secret randomly using the secret generation circuitry 230. The generated secret is sent to the encapsulation/decapsulation circuitry 250. The encapsulation/decapsulation circuitry 250 is configured to generate a ciphertext by encapsulating the secret generated by the secret generation circuitry 230 using the ephemeral public key of another device. For example, the encapsulation/decapsulation circuitry 250 of the device 102 generates a ciphertext by encapsulating the secret generated by the secret generation circuitry 230 of the device 102 using the ephemeral public key of the device 104, and the encapsulation/decapsulation circuitry 250 of the device 104 generates a ciphertext by encapsulating the secret generated by the secret generation circuitry 230 of the device 104 using the ephemeral public key of the device 102. The D2D communication circuitry 210 of each device 102/104 sends the ciphertext to the other device 104/102.

The encapsulation/decapsulation circuitry 250 is configured to decapsulate the received ciphertext using the ephemeral private key of the device 102/104 and retrieves the secret generated by the other device. The encapsulation/decapsulation circuitry 250 of the device 102 decapsulates the ciphertext received from the device 104 using the ephemeral private key of the device 102 and retrieves the secret generated by the device 104. The encapsulation/decapsulation circuitry 250 of the device 104 decapsulates the ciphertext received from the device 102 using the ephemeral private key of the device 104 and retrieves the secret generated by the device 102.

The D2D communication circuitry 210 then generates a shared session secret by combining its own secret with the secret received from the other device. In some examples, the session shared secret may be generated by exclusive OR operation with the two secrets. Alternatively, the session shared secret may be generated by using a key derivation function (KDF) with the two secrets.

The D2D communication circuitry 210 may be a dedicated hardware configured to perform the data transfer/retrieval and processing of the data as disclosed above. Alternatively, the D2D communication circuitry 210 may be processing circuitry (e.g., a mini-processor and memory) configured to execute software codes that are configured to perform the data transfer/retrieval and processing of the data as disclosed above.

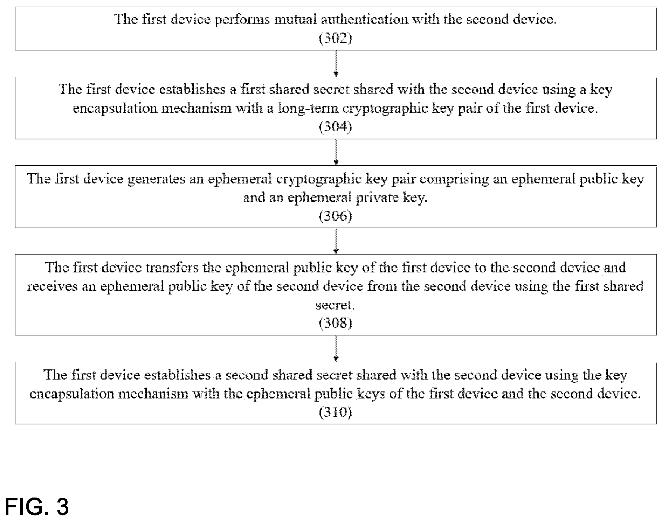

FIG. 3 is a flow diagram of an example process for generating a shared session secret with forward secrecy between a first device and a second device. The first device performs mutual authentication with the second device (302). In examples, for performing the mutual authentication, the first device sends a long-term public key and a public key certificate of the first device to the second device and receives a long-term public key and a public key certificate of the second device from the second device. The first device then verifies the public key certificate of the second device. The second device also verifies the public key certificate of the first device.

In some examples, a global public key of the manufacturer of the second device may be stored in a storage (e.g., eFuse) of the first device and the first device may verify the public key certificate of the second device using the global public key of the manufacturer of the second device. In some examples, the first device may obtain a public key of the manufacturer of the second device from a network and verify the public key certificate of the second device using the public key of the manufacturer of the second device obtained from the network. The second device also performs the same processing.

The first device then establishes a first shared secret shared with the second device using a key encapsulation mechanism with a long-term cryptographic key pair of the first device (304). The first shared secret may be a single-use shared secret. In some examples, for establishing the first shared secret, the first device generates a first secret (e.g., a random number) and generates a first ciphertext by encapsulating the first secret using the long-term public key of the second device and sends the first ciphertext to the second device. The second device also performs the same processing. The second device generates a second secret (e.g., a random number) and generates a second ciphertext by encapsulating the second secret using the long-term public key of the first device and sends the second ciphertext to the first device. The first device receives the second ciphertext from the second device. The first device then decapsulates the received second ciphertext using a long-term private key of the first device and retrieves the second secret. The second device performs the same processing. The first and second devices then generate the first shared secret (e.g., a single-use shared secret) by combining the first secret and the second secret (e.g., exclusive OR operation with the first and second secrets or using a KDF with the first and second secrets).

The first device generates an ephemeral cryptographic key pair comprising an ephemeral public key and an ephemeral private key (306). The second device also generates an ephemeral cryptographic key pair comprising an ephemeral public key and an ephemeral private key. The first device then transfers the ephemeral public key of the first device to the second device and receives an ephemeral public key of the second device from the second device using the first shared secret (308). In examples, a symmetric encryption may be used for transferring the ephemeral public key to the other device. For example, the first device generates a third ciphertext by encrypting the ephemeral public key of the first device using the first shared secret as an encryption key of an authenticated symmetric key encryption algorithm and sends the third ciphertext to the second device. The second device performs the same processing. The second device generates the fourth ciphertext by encrypting an ephemeral public key of the second device using the first shared secret as the same encryption key of the authenticated symmetric key encryption algorithm and sends the fourth ciphertext to the first device. The first and second devices perform the symmetric encryption using the first shared secret to transfer the ephemeral public key to the other device. Any conventional symmetric encryption mechanism may be used. The first device receives the fourth ciphertext from the second device, and then decrypts the fourth ciphertext using the first shared secret as a decryption key of the authenticated symmetric key encryption algorithm to obtain the ephemeral public key of the second device. The second device also receives the third ciphertext from the first device, and then decrypts the third ciphertext using the first shared secret as a decryption key of the authenticated symmetric key encryption algorithm to obtain the ephemeral public key of the first device.

The first device then establishes a second shared secret shared with the second device using the key encapsulation mechanism with the ephemeral public keys of the first device and the second device (310). The second shared secret is used as the shared session secret for the session. For establishing the second shared secret, the first device generates a third secret and generates a fifth ciphertext by encapsulating the third secret using the ephemeral public key of the second device and sends the fifth ciphertext to the second device. The second device performs the same processing. The first device receives a sixth ciphertext from the second device. The sixth ciphertext is generated by the second device by encapsulating a fourth secret generated by the second device using the ephemeral public key of the first device. The first device decapsulates the received sixth ciphertext using the ephemeral private key of the first device and retrieves the fourth secret. The first device then generates the second shared secret by combining the third secret with the fourth secret (e.g., exclusive OR operation with the third and fourth secrets or using a KDF with the third and fourth secrets).

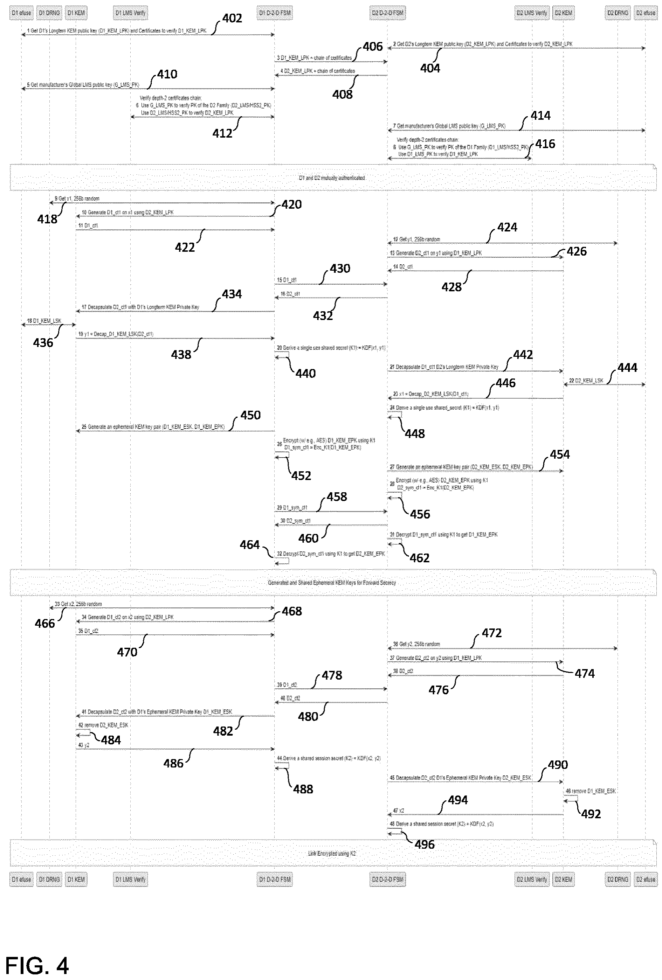

FIG. 4 shows an example flow for generating a secure shared session secret with forward secrecy. Each device contains its own long-term cryptographic key pair (a long-term public key and a long-term private key), for example in an electronic fuse (eFuse) along with the public key certificate or a chain of certificates provided by the manufacturer of each device. Any party can verify this public key certificate or the chain of certificates using the public key of the manufacturer which may be available in the manufacturer's public webpage or database.

The D2D communication circuitry (e.g., D2D finite state machine (FSM)) of the first device (device 1 (D1)) retrieves the long-term public key and the public key certificate or a chain of certificates of the first device from the storage (e.g., eFuse) in the first device (402) and sends them to the second device (device 2 (D2)) (406). The D2D communication circuitry (D2D FSM) of the second device retrieves the long-term public key and the public key certificate or a chain of certificates of the second device from the storage (e.g., eFuse) in the second device (404) and sends them to the first device (408).

The storage (e.g., eFuse) may include a public key (e.g., a global public key) of the manufacturer of the device. In that case, the public key certificate verification circuitry (e.g., based on Leighton-Micali hash-based signatures (LMS), etc.) of the first device retrieves the public key (e.g., the global public key) of the manufacturer of the second device from the storage (410) and verifies the public key certificate or the chain of certificates of the second device using the public key of the manufacturer of the second device (412). The public key certificate verification circuitry (e.g., based on LMS, etc.) of the second device retrieves the public key (e.g., a global public key) of the manufacturer of the first device from the storage (414) and verifies the public key certificate or the chain of certificates of the first device using the public key of the manufacturer of the first device (416). If the verification succeeds, a mutual authentication is established between the first device and the second device.

For example, the chain of certificates may be a depth 2 certificate chain. A depth 2 certificate chain refers to a sequence of three certificates used to establish trust in a digital communication. In a depth 2 certificate chain, a root certificate is the top-most certificate in the hierarchy. It is self-signed and issued by a trusted certificate authority (CA). The root certificate is widely trusted and is used to sign intermediate certificates. An intermediate certificate is signed by the root certificate and acts as a bridge between the root certificate and the end-entity certificate. The intermediate certificate helps in managing the issuance of certificates and can be revoked without affecting the root certificate. The end-entity certificate is the certificate issued to the end user, server, device, etc. The end-entity certificate is signed by the intermediate certificate and is used in the actual digital communication. This chain of certificates ensures that the end-entity certificate can be trusted because it has been signed by an intermediate certificate, which in turn is signed by a trusted root certificate.

The first device then generates a secret (x1) (e.g., a random number by a random number generator) (418) and the encapsulation/decapsulation circuitry of the first device generates a ciphertext using the secret (x1) and the long-term public key of the second device (420, 422). The second device generates a secret (y1) (e.g., a random number by a random number generator) (424) and the encapsulation/decapsulation circuitry of the second device generates a ciphertext using the secret (y1) and the long-term public key of the first device (426, 428). The D2D communication device of the first device sends the ciphertext generated by the first device to the second device (430), and the D2D communication device of the second device sends the ciphertext generated by the second device to the first device (432). The first device (the encapsulation/decapsulation circuitry) decapsulates the ciphertext received from the second device using the long-term private key of the first device stored in the storage circuitry and retrieves the secret (y1) generated by the second device from the ciphertext (434, 436, 438). The first device then generates a shared secret (K1) from the two secrets (i.e., the secret (x1) generated by the first device and the secret (y1) received from the second device) (440). The second device performs the same process. The second device (the encapsulation/decapsulation circuitry) decapsulates the ciphertext received from the first device using the long-term private key of the second device stored in the storage circuitry and retrieves the secret (x1) generated by the first device from the ciphertext received from the first device (442, 444, 446). The second device generates a shared secret (K1) from the two secrets (i.e., the secret (y1) generated by the second device and the secret (x1) received from the first device) (448). For example, the first device and the second device may generate the shared secret by exclusive OR operation on the two secrets (x1, y1) or applying a key derivation function on the two secrets (x1, y1).

The devices then generate an ephemeral cryptographic key pair (i.e., an ephemeral private key and an ephemeral public key), respectively, and transfers the respective ephemeral public key to the other device. For the transfer of the ephemeral public key, in examples, the first device and the second device may use symmetric encryption using the shared secret (K1). If symmetric encryption is used, the shared secret (K1) is used for both encryption and decryption by the first and second devices. An authenticated encryption technique (e.g., AES-GCM, Ascon, etc.) could be used to achieve both confidentiality and integrity protection in this place. The first device generates an ephemeral cryptographic key pair (450) and encrypts the ephemeral public key of the first device using the shared secret (K1) (452). The second device generates an ephemeral cryptographic key pair (454) and encrypts the ephemeral public key of the second device using the shared secret (K1) (456). The first device sends the ciphertext (i.e., the encrypted ephemeral public key of the first device) to the second device (458), and the second device sends the ciphertext (i.e., the encrypted ephemeral public key of the second device) to the first device (460). The second device decrypts the ciphertext received from the first device to obtain the ephemeral public key of the first device (462), and the first device decrypts the ciphertext received from the second device to obtain the ephemeral public key of the second device (464).

The first and second devices then generate another secret for forward secrecy. The first device generates another secret (x2) (e.g., a random number by a random number generator) (466) and the encapsulation/decapsulation circuitry of the first device generates a ciphertext using the secret (x2) and the ephemeral public key of the second device (468, 470). The second device generates another secret (y2) (e.g., a random number by a random number generator) (472) and the encapsulation/decapsulation circuitry of the second device generates a ciphertext using the secret (y2) and the ephemeral public key of the first device (474, 476). The D2D communication device of the first device sends the ciphertext generated by the first device to the second device (478), and the D2D communication device of the second device sends the ciphertext generated by the second device to the first device (480). The first device (the encapsulation/decapsulation circuitry) decapsulates the ciphertext using the ephemeral private key of the first device and retrieves the secret generated by the second device from the ciphertext received from the second device (482, 484, 486). The first device then generates a shared session secret (a temporary secret) from the two secrets (i.e., the secret (x2) generated by the first device and the secret (y2) received from the second device) (488). The second device (the encapsulation/decapsulation circuitry) decapsulates the ciphertext using the ephemeral private key of the second device and retrieves the secret generated by the first device from the ciphertext received from the first device (490, 492, 494). The second device then generates a shared session secret (a temporary secret) from the two secrets (i.e., the secret (y2) generated by the second device and the secret (x2) received from the first device) (496). For example, the first device and the second device may generate the shared session secret by exclusive OR operation on the two secrets (x2, y2) or applying a Key Derivation Function (KDF) on the two secrets (x2, y2).

In examples, the devices generate ephemeral KEM key pair using the respective devices' authentic long-term KEM keys and compute a temporary shared secret which is used to transfer the ephemeral KEM public keys between the two devices. The ephemeral KEM keys are then used to establish the shared session secret. As this shared session secret is generated using the ephemeral (e.g., one-time) KEM keys, other than this specific session no prior and future sessions can be impacted (broken) if somehow this specific ephemeral KEM keys or shared session key are compromised, which provides forward secrecy.

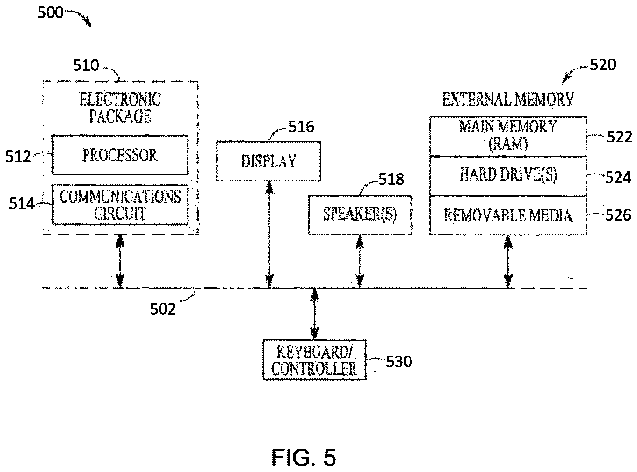

FIG. 5 is a block diagram of an electronic apparatus 500 incorporating at least one electronic assembly and/or method described herein. Electronic apparatus 500 is-merely one example of an electronic apparatus in which forms of the electronic assemblies and/or methods described herein may be used. Examples of an electronic apparatus 500 include, but are not limited to, personal computers, tablet computers, mobile telephones, game devices, MP3 or other digital music players, etc. In this example, electronic apparatus 500 comprises a data processing system that includes a system bus 502 to couple the various components of the electronic apparatus 500. System bus 502 provides communications links among the various components of the electronic apparatus 500 and may be implemented as a single bus, as a combination of busses, or in any other suitable manner.

An electronic assembly 510 as describe herein may be coupled to system bus 502. The electronic assembly 510 may include any circuit or combination of circuits. In one embodiment, the electronic assembly 510 includes a processor 512 which can be of any type. As used herein, "processor" means any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, or any other type of processor or processing circuit.

Other types of circuits that may be included in electronic assembly 510 are a custom circuit, an application-specific integrated circuit (ASlC), or the like, such as, for example, one or more circuits (such as a communications circuit 514) for use in wireless devices like mobile telephones, tablet computers, laptop computers, two-way radios, and similar electronic systems. The IC can perform any other type of function.

The electronic apparatus 500 may also include an external memory 520, which in turn may include one or more memory elements suitable to the particular application, such as a main memory 522 in the form of random access memory (RAM), one or more hard drives 524, and/or one or more drives that handle removable media 526 such as compact disks (CD), flash memory cards, digital video disk (DVD), and the like.

The electronic apparatus 500 may also include a display device 516, one or more speakers 518, and a keyboard and/or controller 530, which can include a mouse, trackball, touch screen, voice-recognition device, or any other device that permits a system user to input information into and receive information from the electronic apparatus 500.

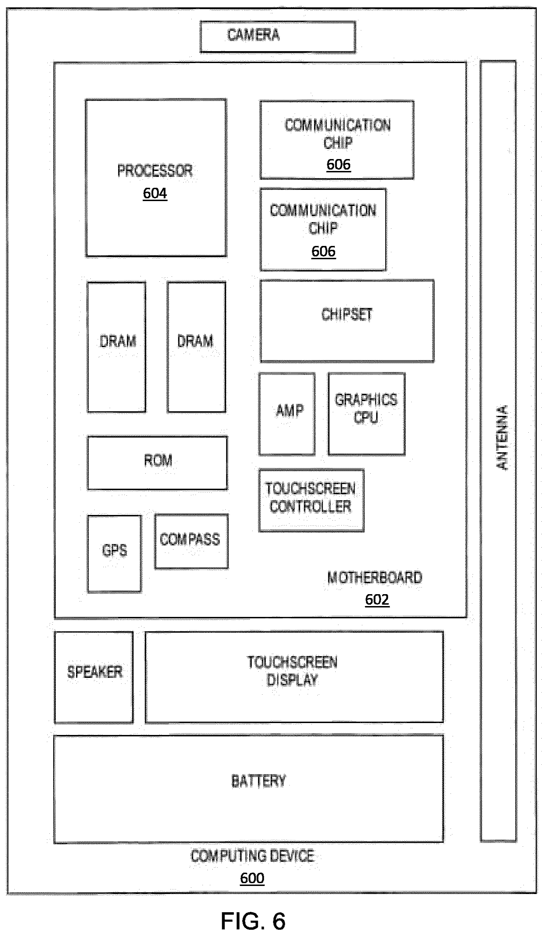

FIG. 6 illustrates a computing device 600 in accordance with one implementation of the invention. The computing device 600 houses a board 602. The board 602 may include a number of components, including but not limited to a processor 604 and at least one communication chip 606. The processor 604 is physically and electrically coupled to the board 602. In some implementations the at least one communication chip 606 is also physically and electrically coupled to the board 602. In further implementations, the communication chip 606 is part of the processor 604. Depending on its applications, computing device 600 may include other components that may or may not be physically and electrically coupled to the board 602. These other components include, but are not limited to, volatile memory (e.g., DRAM), non-volatile memory (e.g., ROM), flash memory, a graphics processor, a digital signal processor, a crypto processor, a chipset, an antenna, a display, a touchscreen display, a touchscreen controller, a battery, an audio codec, a video codec, a power amplifier, a global positioning system (GPS) device, a compass, an accelerometer, a gyroscope, a speaker, a camera, and a mass storage device (such as hard disk drive, compact disk (CD), digital versatile disk (DVD), and so forth). The communication chip 606 enables wireless communications for the transfer of data to and from the computing device 600. The term "wireless" and its derivatives may be used to describe circuits, devices, systems, methods, techniques, communications channels, etc., that may communicate data through the use of modulated electromagnetic radiation through a non- solid medium. The term does not imply that the associated devices do not contain any wires, although in some embodiments they might not. The communication chip 606 may implement any of a number of wireless standards or protocols, including but not limited to Wi-Fi (IEEE 802.11 family), WiMAX (IEEE 802.16 family), IEEE 802.20, long term evolution (LTE), Ev- DO, HSPA+, HSDPA+, HSUPA+, EDGE, GSM, GPRS, CDMA, TDMA, DECT, Bluetooth, derivatives thereof, as well as any other wireless protocols that are designated as 3G, 4G, 5G, and beyond. The computing device 600 may include a plurality of communication chips 606. For instance, a first communication chip 606 may be dedicated to shorter range wireless communications such as Wi-Fi and Bluetooth and a second communication chip 606 may be dedicated to longer range wireless communications such as GPS, EDGE, GPRS, CDMA, WiMAX, LTE, Ev-DO, and others. The processor 604 of the computing device 600 includes an integrated circuit die packaged within the processor 604. In some implementations of the invention, the integrated circuit die of the processor includes one or more devices that are assembled in an ePLB or eWLB based P0P package that that includes a mold layer directly contacting a substrate, in accordance with implementations of the invention. The term "processor" may refer to any device or portion of a device that processes electronic data from registers and/or memory to transform that electronic data into other electronic data that may be stored in registers and/or memory. The communication chip 606 also includes an integrated circuit die packaged within the communication chip 606. In accordance with another implementation of the invention, the integrated circuit die of the communication chip includes one or more devices that are assembled in an ePLB or eWLB based P0P package that that includes a mold layer directly contacting a substrate, in accordance with implementations of the invention.

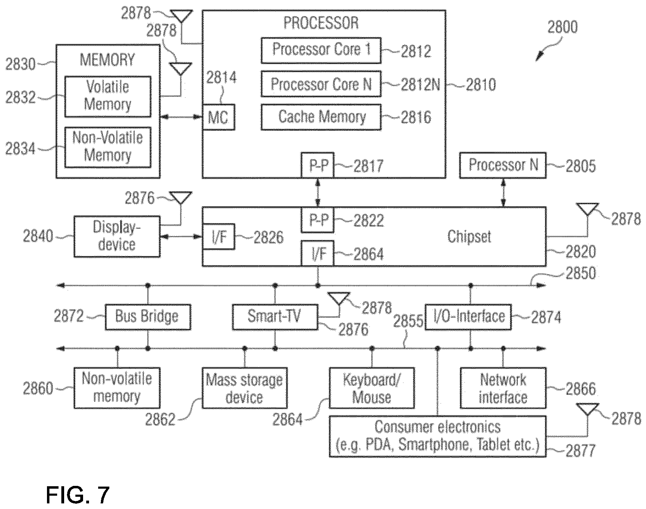

FIG. 7 is included to show an example of a higher level device application for the disclosed embodiments. The MAA cantilevered heat pipe apparatus embodiments may be found in several parts of a computing system. In an embodiment, the MAA cantilevered heat pipe is part of a communications apparatus such as is affixed to a cellular communications tower. The MAA cantilevered heat pipe may also be referred to as an MAA apparatus. In an embodiment, a computing system 2800 includes, but is not limited to, a desktop computer. In an embodiment, a system 2800 includes, but is not limited to a laptop computer. In an embodiment, a system 2800 includes, but is not limited to a netbook. In an embodiment, a system 2800 includes, but is not limited to a tablet. In an embodiment, a system 2800 includes, but is not limited to a notebook computer. In an embodiment, a system 2800 includes, but is not limited to a personal digital assistant (PDA). In an embodiment, a system 2800 includes, but is not limited to a server. In an embodiment, a system 2800 includes, but is not limited to a workstation. In an embodiment, a system 2800 includes, but is not limited to a cellular telephone. In an embodiment, a system 2800 includes, but is not limited to a mobile computing device. In an embodiment, a system 2800 includes, but is not limited to a smart phone. In an embodiment, a system 2800 includes, but is not limited to an internet appliance. Other types of computing devices may be configured with the microelectronic device that includes MAA apparatus embodiments.

In an embodiment, the processor 2810 has one or more processing cores 2812 and 2812N, where 2812N represents the Nth processor core inside processor 2810 where N is a positive integer. In an embodiment, the electronic device system 2800 using a MAA apparatus embodiment that includes multiple processors including 2810 and 2805, where the processor 2805 has logic similar or identical to the logic of the processor 2810. In an embodiment, the processing core 2812 includes, but is not limited to, pre-fetch logic to fetch instructions, decode logic to decode the instructions, execution logic to execute instructions and the like. In an embodiment, the processor 2810 has a cache memory 2816 to cache at least one of instructions and data for the MAA apparatus in the system 2800. The cache memory 2816 may be organized into a hierarchal structure including one or more levels of cache memory.

In an embodiment, the processor 2810 includes a memory controller 2814, which is operable to perform functions that enable the processor 2810 to access and communicate with memory 2830 that includes at least one of a volatile memory 2832 and a non-volatile memory 2834. In an embodiment, the processor 2810 is coupled with memory 2830 and chipset 2820. The processor 2810 may also be coupled to a wireless antenna 2878 to communicate with any device configured to at least one of transmit and receive wireless signals. In an embodiment, the wireless antenna interface 2878 operates in accordance with, but is not limited to, the IEEE 802.11 standard and its related family, Home Plug AV (HPAV), Ultra Wide Band (UWB), Bluetooth, WiMax, or any form of wireless communication protocol.

In an embodiment, the volatile memory 2832 includes, but is not limited to, Synchronous Dynamic Random Access Memory (SDRAM), Dynamic Random Access Memory (DRAM), RAMBUS Dynamic Random Access Memory (RDRAM), and/or any other type of random access memory device. The non-volatile memory 2834 includes, but is not limited to, flash memory, phase change memory (PCM), read-only memory (ROM), electrically erasable programmable read-only memory (EEPROM), or any other type of non-volatile memory device.

The memory 2830 stores information and instructions to be executed by the processor 2810. In an embodiment, the memory 2830 may also store temporary variables or other intermediate information while the processor 2810 is executing instructions. In the illustrated embodiment, the chipset 2820 connects with processor 2810 via Point-to-Point (PtP or P-P) interfaces 2817 and 2822. Either of these PtP embodiments may be achieved using a MAA apparatus embodiment as set forth in this disclosure. The chipset 2820 enables the processor 2810 to connect to other elements in the MAA apparatus embodiments in a system 2800. In an embodiment, interfaces 2817 and 2822 operate in accordance with a PtP communication protocol such as the Intel^{®} QuickPath Interconnect (QPI) or the like. In other embodiments, a different interconnect may be used.

In an embodiment, the chipset 2820 is operable to communicate with the processor 2810, 2805N, the display device 2840, and other devices 2872, 2876, 2874, 2860, 2862, 2864, 2866, 2877, etc. The chipset 2820 may also be coupled to a wireless antenna 2878 to communicate with any device configured to at least do one of transmit and receive wireless signals.

The chipset 2820 connects to the display device 2840 via the interface 2826. The display 2840 may be, for example, a liquid crystal display (LCD), a plasma display, cathode ray tube (CRT) display, or any other form of visual display device. In and embodiment, the processor 2810 and the chipset 2820 are merged into a MAA apparatus in a system. Additionally, the chipset 2820 connects to one or more buses 2850 and 2855 that interconnect various elements 2874, 2860, 2862, 2864, and 2866. Buses 2850 and 2855 may be interconnected together via a bus bridge 2872 such as at least one MAA apparatus embodiment. In an embodiment, the chipset 2820 couples with a non-volatile memory 2860, a mass storage device(s) 2862, a keyboard/mouse 2864, and a network interface 2866 by way of at least one of the interface 2824 and 2874, the smart TV 2876, and the consumer electronics 2877, etc.

In an embodiment, the mass storage device 2862 includes, but is not limited to, a solid state drive, a hard disk drive, a universal serial bus flash memory drive, or any other form of computer data storage medium. In one embodiment, the network interface 2866 is implemented by any type of well-known network interface standard including, but not limited to, an Ethernet interface, a universal serial bus (USB) interface, a Peripheral Component Interconnect (PCI) Express interface, a wireless interface and/or any other suitable type of interface. In one embodiment, the wireless interface operates in accordance with, but is not limited to, the IEEE 802.11 standard and its related family, Home Plug AV (HPAV), Ultra Wide Band (UWB), Bluetooth, WiMax, or any form of wireless communication protocol.

While the modules shown in FIG. 7 are depicted as separate blocks within the MAA apparatus embodiment in a computing system 2800, the functions performed by some of these blocks may be integrated within a single semiconductor circuit or may be implemented using two or more separate integrated circuits. For example, although cache memory 2816 is depicted as a separate block within processor 2810, cache memory 2816 (or selected aspects of 2816) can be incorporated into the processor core 2812.

Where useful, the computing system 2800 may have a broadcasting structure interface such as for affixing the MAA apparatus to a cellular tower.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions or computer program products as well as any data created and/or used during implementation of the disclosed technologies can be stored on one or more tangible or non-transitory computer-readable storage media, such as volatile memory (e.g., DRAM, SRAM), non-volatile memory (e.g., flash memory, chalcogenide-based phase-change non-volatile memory) optical media discs (e.g., DVDs, CDs), and magnetic storage (e.g., magnetic tape storage, hard disk drives). Computer-readable storage media can be contained in computer-readable storage devices such as solid-state drives, USB flash drives, and memory modules. Alternatively, any of the methods disclosed herein (or a portion) thereof may be performed by hardware components comprising non-programmable circuitry. In some examples, any of the methods herein can be performed by a combination of non-programmable hardware components and one or more processing units executing computer-executable instructions stored on computer-readable storage media.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

As used in this application and the claims, a list of items joined by the term "and/or" can mean any combination of the listed items. For example, the phrase "A, B and/or C" can mean A; B; C; A and B; A and C; B and C; or A, B and C. As used in this application and the claims, a list of items joined by the term "at least one of" can mean any combination of the listed terms. For example, the phrase "at least one of A, B or C" can mean A; B; C; A and B; A and C; B and C; or A, B, and C. Moreover, as used in this application and the claims, a list of items joined by the term "one or more of" can mean any combination of the listed terms. For example, the phrase "one or more of A, B and C" can mean A; B; C; A and B; A and C; B and C; or A, B, and C.

The disclosed methods, apparatuses, and systems are not to be construed as limiting in any way. Instead, the present disclosure is directed toward all novel and nonobvious features and aspects of the various disclosed examples, alone and in various combinations and sub-combinations with one another. The disclosed methods, apparatuses, and systems are not limited to any specific aspect or feature or combination thereof, nor do the disclosed examples require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

Although the operations of some of the disclosed methods are described in a particular, sequential order for convenient presentation, it is to be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods can be used in conjunction with other methods.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The examples as described herein may be summarized as follows:

An example (e.g., example 1) relates to a method for generating a shared session secret with forward secrecy between a first device and a second device. The method includes the first device performing mutual authentication with the second device, the first device establishing a first shared secret shared with the second device using a key encapsulation mechanism, the first device generating an ephemeral cryptographic key pair comprising an ephemeral public key and an ephemeral private key, the first device transferring the ephemeral public key of the first device to the second device and receiving an ephemeral public key of the second device from the second device using the first shared secret, and the first device establishing a second shared secret shared with the second device using the key encapsulation mechanism with the ephemeral public keys of the first device and the second device, wherein the second shared secret is used as the shared session secret.

Another example, (e.g., example 2) relates to a previously described example (e.g., example 1), wherein the step of performing the mutual authentication includes the first device sending a long-term public key and a public key certificate of the first device to the second device, the first device receiving a long-term public key and a public key certificate of the second device from the second device, and the first device verifying the public key certificate of the second device.

Another example, (e.g., example 3) relates to a previously described example (e.g., example 2), wherein the first device includes a global public key of a manufacturer of the second device and verifies the public key certificate of the second device using the global public key of the manufacturer of the second device.

Another example, (e.g., example 4) relates to a previously described example (e.g., example 2), wherein the first device obtains a public key of a manufacturer of the second device from a network and verifies the public key certificate of the second device using the obtained public key of the manufacturer of the second device.

Another example, (e.g., example 5) relates to a previously described example (e.g., any one of examples 2-4), wherein the step of establishing the first shared secret includes the first device generating a first secret, the first device generating a first ciphertext by encapsulating the first secret using the long-term public key of the second device, and sending the first ciphertext to the second device, the first device receiving a second ciphertext from the second device, wherein the second ciphertext is generated by the second device by encapsulating a second secret generated by the second device using the long-term public key of the first device, the first device decapsulating the received second ciphertext using a long-term private key of the first device and retrieving the second secret, and the first device generating the first shared secret by combining the first secret and the second secret.

Another example, (e.g., example 6) relates to a previously described example (e.g., example 5), wherein the step of transferring the ephemeral public key of the first device to the second device and receiving the ephemeral public key of the second device from the second device includes the first device generating a third ciphertext by encrypting the ephemeral public key of the first device using the first shared secret as an encryption key of an authenticated symmetric key encryption algorithm, and sending the third ciphertext to the second device, the first device receiving a fourth ciphertext from the second device, wherein the second device generates the fourth ciphertext by encrypting the ephemeral public key of the second device using the first shared secret as the encryption key of the authenticated symmetric key encryption algorithm, and the first device decrypting the fourth ciphertext using the first shared secret as a decryption key of the authenticated symmetric key encryption algorithm and obtaining the ephemeral public key of the second device.

Another example, (e.g., example 7) relates to a previously described example (e.g., example 6), wherein the step of establishing the second shared secret includes the first device generating a third secret, the first device generating a fifth ciphertext by encapsulating the third secret using the ephemeral public key of the second device, and sending the fifth ciphertext to the second device, the first device receiving a sixth ciphertext from the second device, wherein the sixth ciphertext is generated by the second device by encapsulating a fourth secret generated by the second device using the ephemeral public key of the first device, the first device decapsulating the received sixth ciphertext using the ephemeral private key of the first device and retrieving the fourth secret, and the first device generating the second shared secret by combining the third secret with the fourth secret.

Another example, (e.g., example 8) relates to a previously described example (e.g., example 7), wherein the first device generates the first shared secret by exclusive ORing the first secret with the second secret, and/or generates the second shared session secret by exclusive ORing the third secret with the fourth secret.

Another example, (e.g., example 9) relates to a previously described example (e.g., any one of examples 7-8), wherein the first device generates the first shared secret and/or the second shared secret by using a key derivation function.

Another example, (e.g., example 10) relates to a previously described example (e.g., any one of examples 7-9), wherein the first secret and the third secret are a random number generated by the first device.

Another example, (e.g., example 11) relates to a device for generating a shared session secret with a second device. The device includes storage circuitry configured to store a long-term cryptographic key pair and a public key certificate of the device, secret generation circuitry configured to generate a secret, D2D communication circuitry configured to directly communicate with the second device, public key certificate verification circuitry configured to verify a public key certificate, and encapsulation/decapsulation circuitry configured to perform encapsulation and decapsulation, wherein the D2D communication circuitry and the public key certificate verification circuitry are configured to perform mutual authentication with the second device, wherein the D2D communication circuitry is configured to establish a first shared secret shared with the second device using a key encapsulation mechanism with a long-term cryptographic key pair of the device, wherein the encapsulation/decapsulation circuity is configured to generate an ephemeral cryptographic key pair of the device comprising an ephemeral public key and an ephemeral private key, and wherein the D2D communication circuitry is configured to transfer the ephemeral public key of the device to the second device and receive an ephemeral public key of the second device from the second device using the first shared secret, and establish a second shared secret shared with the second device using the key encapsulation mechanism with the ephemeral public keys of the device and the second device, wherein the second shared secret is used as the shared session secret.

Another example, (e.g., example 12) relates to a previously described example (e.g., example 11), wherein the D2D communication circuitry is configured to send a long-term public key and a public key certificate of the device to the second device, receive a long-term public key and a public key certificate of the second device from the second device, and the public key certificate verification circuitry is configured to verify the public key certificate of the second device.

Another example, (e.g., example 13) relates to a previously described example (e.g., example 12), wherein the storage circuitry includes a global public key of a manufacturer of the second device and the public key certificate verification circuitry is configured to verify the public key certificate of the second device using the global public key of the manufacturer of the second device.

Another example, (e.g., example 14) relates to a previously described example (e.g., example 12), wherein the D2D communication circuitry is configured to obtain a public key of a manufacturer of the second device from a network and the public key certificate verification circuitry is configured to verify the public key certificate of the second device using the public key of the manufacturer of the second device.

Another example, (e.g., example 15) relates to a previously described example (e.g., any one of examples 12-14), wherein the secret generation circuitry is configured to generate a first secret, wherein the encapsulation/decapsulation circuitry is configured to generate a first ciphertext by encapsulating the first secret using the long-term public key of the second device, wherein the D2D communication circuitry is configured to send the first ciphertext to the second device, and receive a second ciphertext from the second device, wherein the second ciphertext is generated by the second device by encapsulating a second secret generated by the second device using the long-term public key of the first device, wherein the encapsulation/decapsulation circuitry is configured to decapsulate the received second ciphertext using a long-term private key of the first device and retrieve the second secret, and wherein the D2D communication circuitry is configured to generate the first shared secret by combining the first secret and the second secret.

Another example, (e.g., example 16) relates to a previously described example (e.g., example 15), wherein the D2D communication circuitry is configured to generate a third ciphertext by encrypting the ephemeral public key of the device using the first shared secret as an encryption key of an authenticated symmetric key encryption algorithm, send the third ciphertext to the second device, receive a fourth ciphertext from the second device that is generated by the second device by encrypting the ephemeral public key of the second device using the first shared secret as the encryption key of the authenticated symmetric key encryption algorithm, and decrypt the fourth ciphertext using the first shared secret as a decryption key of the authenticated symmetric key encryption algorithm to obtain the ephemeral public key of the second device.

Another example, (e.g., example 17) relates to a previously described example (e.g., example 16), wherein the secret generation circuitry is configured to generate a third secret, wherein the encapsulation/decapsulation circuitry is configured to generate a fifth ciphertext by encapsulating the third secret using the ephemeral public key of the second device, wherein the D2D communication circuitry is configured to send the fifth ciphertext to the second device, and receive a sixth ciphertext from the second device that is generated by the second device by encapsulating a fourth secret generated by the second device using the ephemeral public key of the device, wherein the encapsulation/decapsulation circuitry is configured to decapsulate the received sixth ciphertext using the ephemeral private key of the device and retrieve the fourth secret, wherein the D2D communication circuitry is configured to generate the second shared secret by combining the third secret with the fourth secret.

Another example, (e.g., example 18) relates to a previously described example (e.g., example 17), wherein the D2D communication circuitry is configured to generate the first shared secret by exclusive ORing the first secret with the second secret, and/or generate the second shared secret by exclusive ORing the third secret with the fourth secret.

Another example, (e.g., example 19) relates to a previously described example (e.g., any one of examples 17-18), wherein the D2D communication circuitry is configured to generate the first shared secret and/or the second shared secret by using a key derivation function.

A non-transitory machine-readable medium including code, when executed, to cause a machine to perform the method as in any one of examples 1-10.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, - processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A method for generating a shared session secret with forward secrecy between a first device and a second device, comprising:
the first device performing (302) mutual authentication with the second device;
the first device establishing (304) a first shared secret shared with the second device using a key encapsulation mechanism;
the first device generating (306) an ephemeral cryptographic key pair comprising an ephemeral public key and an ephemeral private key;
the first device transferring (308) the ephemeral public key of the first device to the second device and
receiving an ephemeral public key of the second device from the second device using the first shared secret; and
the first device establishing (310) a second shared secret shared with the second device using the key encapsulation mechanism with the ephemeral public keys of the first device and the second device,
wherein the second shared secret is used as the shared session secret.

2. The method of claim 1, wherein the step of performing the mutual authentication includes:
the first device sending a long-term public key and a public key certificate of the first device to the second device;
the first device receiving a long-term public key and a public key certificate of the second device from the second device; and
the first device verifying the public key certificate of the second device.

3. The method of claim 2, wherein the first device includes a global public key of a manufacturer of the second device and verifies the public key certificate of the second device using the global public key of the manufacturer of the second device.

4. The method as in any one of claims 2-3, wherein the first device obtains a public key of a manufacturer of the second device from a network and verifies the public key certificate of the second device using the obtained public key of the manufacturer of the second device.

5. The method as in any one of claims 2-4, wherein the step of establishing the first shared secret includes:
the first device generating a first secret;
the first device generating a first ciphertext by encapsulating the first secret using the long-term public key of the second device, and sending the first ciphertext to the second device;
the first device receiving a second ciphertext from the second device, wherein the second ciphertext is generated by the second device by encapsulating a second secret generated by the second device using the long-term public key of the first device;
the first device decapsulating the received second ciphertext using a long-term private key of the first device and retrieving the second secret; and
the first device generating the first shared secret by combining the first secret and the second secret.

6. The method of claim 5, wherein the step of transferring the ephemeral public key of the first device to the second device and receiving the ephemeral public key of the second device from the second device includes:
the first device generating a third ciphertext by encrypting the ephemeral public key of the first device using the first shared secret as an encryption key of an authenticated symmetric key encryption algorithm, and sending the third ciphertext to the second device;
the first device receiving a fourth ciphertext from the second device, wherein the second device generates the fourth ciphertext by encrypting the ephemeral public key of the second device using the first shared secret as the encryption key of the authenticated symmetric key encryption algorithm; and
the first device decrypting the fourth ciphertext using the first shared secret as a decryption key of the authenticated symmetric key encryption algorithm and obtaining the ephemeral public key of the second device.

7. The method of claim 6, wherein the step of establishing the second shared secret includes:
the first device generating a third secret;
the first device generating a fifth ciphertext by encapsulating the third secret using the ephemeral public key of the second device, and sending the fifth ciphertext to the second device;
the first device receiving a sixth ciphertext from the second device, wherein the sixth ciphertext is generated by the second device by encapsulating a fourth secret generated by the second device using the ephemeral public key of the first device;
the first device decapsulating the received sixth ciphertext using the ephemeral private key of the first device and retrieving the fourth secret; and
the first device generating the second shared secret by combining the third secret with the fourth secret.

8. A device for generating a shared session secret with a second device, comprising:
storage circuitry (220) configured to store a long-term cryptographic key pair and a public key certificate of the device;
secret generation circuitry (230) configured to generate a secret;
device-to-device, D2D, communication circuitry (210) configured to directly communicate with the second device;
public key certificate verification circuitry (240) configured to verify a public key certificate; and
encapsulation/decapsulation circuitry (250) configured to perform encapsulation and decapsulation,
wherein the D2D communication circuitry (210) and the public key certificate verification circuitry (240) are configured to perform mutual authentication with the second device,
wherein the D2D communication circuitry (210) is configured to establish a first shared secret shared with the second device using a key encapsulation mechanism with a long-term cryptographic key pair of the device,
wherein the encapsulation/decapsulation circuity (250) is configured to generate an ephemeral cryptographic key pair of the device comprising an ephemeral public key and an ephemeral private key, and
wherein the D2D communication circuitry (210) is configured to transfer the ephemeral public key of the device to the second device and receive an ephemeral public key of the second device from the second device using the first shared secret, and establish a second shared secret shared with the second device using the key encapsulation mechanism with the ephemeral public keys of the device and the second device, wherein the second shared secret is used as the shared session secret.

9. The device of claim 8, wherein the D2D communication circuitry (210) is configured to send a long-term public key and a public key certificate of the device to the second device, receive a long-term public key and a public key certificate of the second device from the second device, and the public key certificate verification circuitry is configured to verify the public key certificate of the second device.

10. The device of claim 9, wherein the storage circuitry (220) includes a global public key of a manufacturer of the second device and the public key certificate verification circuitry is configured to verify the public key certificate of the second device using the global public key of the manufacturer of the second device.

11. The device as in any one of claims 9-10, wherein the D2D communication circuitry (210) is configured to obtain a public key of a manufacturer of the second device from a network and the public key certificate verification circuitry is configured to verify the public key certificate of the second device using the public key of the manufacturer of the second device.

12. The device as in any one of claims 9-11,
wherein the secret generation circuitry (230) is configured to generate a first secret,
wherein the encapsulation/decapsulation circuitry (250) is configured to generate a first ciphertext by encapsulating the first secret using the long-term public key of the second device,
wherein the D2D communication circuitry (210) is configured to send the first ciphertext to the second device, and receive a second ciphertext from the second device, wherein the second ciphertext is generated by the second device by encapsulating a second secret generated by the second device using the long-term public key of the first device,
wherein the encapsulation/decapsulation circuitry (250) is configured to decapsulate the received second ciphertext using a long-term private key of the first device and retrieve the second secret, and wherein the D2D communication circuitry (210) is configured to generate the first shared secret by combining the first secret and the second secret.

13. The device of claim 12, wherein the D2D communication circuitry (210) is configured to generate a third ciphertext by encrypting the ephemeral public key of the device using the first shared secret as an encryption key of an authenticated symmetric key encryption algorithm, send the third ciphertext to the second device, receive a fourth ciphertext from the second device that is generated by the second device by encrypting the ephemeral public key of the second device using the first shared secret as the encryption key of the authenticated symmetric key encryption algorithm, and decrypt the fourth ciphertext using the first shared secret as a decryption key of the authenticated symmetric key encryption algorithm to obtain the ephemeral public key of the second device.

14. The device of claim 13,
wherein the secret generation circuitry (230) is configured to generate a third secret,
wherein the encapsulation/decapsulation circuitry (250) is configured to generate a fifth ciphertext by encapsulating the third secret using the ephemeral public key of the second device,
wherein the D2D communication circuitry (210) is configured to send the fifth ciphertext to the second device, and receive a sixth ciphertext from the second device that is generated by the second device by encapsulating a fourth secret generated by the second device using the ephemeral public key of the device,
wherein the encapsulation/decapsulation circuitry (250) is configured to decapsulate the received sixth ciphertext using the ephemeral private key of the device and retrieve the fourth secret,
wherein the D2D communication circuitry (210) is configured to generate the second shared secret by combining the third secret with the fourth secret.

15. A non-transitory machine-readable medium including code, when executed, to cause a machine to perform the method as in any one of claims 1-7.
